# EUROPEAN PATENT SPECIFICATION

(11) **EP 0 308 104 B1**
(45) Date of publication and mention of the grant of the patent: **20.07.1994**
(21) Application number: 88308070.7
(22) Date of filing: 31.08.1988
(51) Int. Cl.: B29D 17/00, B29C 39/02

(54) **Mold for molding of substrate for information recording medium and method for preparing substrate for information recording medium**
Form zur Herstellung eines Trägers für Informationsspeicherung und Verfahren zur Herstellung eines Trägers für Informationsspeicherung
Moule pour mouler un support pour l'enregistrement d'information et procédé pour fabriquer un support pour l'enregistrement d'information

(30) Priority: 05.09.1987 JP 222816/87; 07.09.1987 JP 222020/87; 07.09.1987 JP 222021/87; 21.12.1987 JP 324322/87; 28.12.1987 JP 329677/87; 28.12.1987 JP 329678/87; 28.12.1987 JP 329672/87; 28.12.1987 JP 329673/87; 28.12.1987 JP 329674/87; 28.12.1987 JP 329675/87; 28.12.1987 JP 329676/87
(43) Date of publication of application: 22.03.1989
(73) Proprietor: CANON KABUSHIKI KAISHA, Tokyo (JP)
(72) Inventor: Tamura, Tomoyuki, Yokohama-shi Kanagawa-ken (JP); Hiraoka, Mizuho, Kawasaki-shi Kanagawa-ken (JP); Imataki, Hiroyuki, Kawasaki-shi Kanagawa-ken (JP); Sato, Tetsuya, Kawasaki-shi Kanagawa-ken (JP)
(74) Representative: Beresford, Keith Denis Lewis

(56) References cited:
- DE-A- 3 040 955
- GB-A- 2 040 787
- US-A- 4 435 343

## Description

This invention relates to a method for preparing a substrate for an information recording medium and to a mold for cast molding of the substrate.

It is known to provide a substrate for an information recording medium which has upon an information recording surface thereof an uneven pattern e.g. grooves for tracking or pits for recording information. Various methods are known for forming this uneven pattern. In a first method the substrate comprises an thermoplastic resin and a track groove of the stamper type is transferred to the substrate by an injection method or by a hot press method. In a second method called the 2P method a plate of transparent thermosetting or thermoplastic resin has a photocurable resin composition applied thereto, after which a stamper mold is adhered to the coating side and energy e.g. UV rays is imparted from the resin plate side so as to cause the photocurable resin composition to cure and a replica of the stamper mold to become transferred onto the transparent resin plate.

A thermoplastic resin substrate obtained according to the first of the two above methods suffers from the problem that the substrate can become warped or can exhibit optical anisotropy after it has been molded as a result of residual stress or orientation of the molecules during the molding process.

A substrate obtained by the 2P method frequently suffers from the problem that a recording characteristics deteriorate because monomer or polymerization initiator which is used in photocuring can remain present within the resin after photocuring has taken place so that it can influence the optical recording layer of the recording medium.

A further method has been suggested for preparing a substrate for an information recording medium which is free of the above problems, and this method involves cast molding of a prepolymer containing a monomer of the resin or a solvent, molding being carried out using a casting mold previously provided with track grooves on one or both sides thereof. The substrate obtained by this method is subjected to substantially no pressure during molding compared with the previous two methods, and there is the further advantage that any thermoplastic resin, thermosetting resin or photocurable resin can be used to mold the substrate so that a resin which has no harmful influence on the recording layer can be chosen. In the above mentioned cast molding method there have been used as molds having an uneven pattern corresponding to the track grooves, information pits or other preformat information glass plates in which the pattern of unevenness has been formed by photolithography or laser cutting. There have also been known glass or metal plates in which unevenness is formed thereon by direct cutting with the sharp end of a diamond needle.

U.S. Patent No. 4435343, upon which the preamble of the independent claims is based, discloses the manufacture of an information recording medium by a cast molding process of the type described in the preceding paragraph. These known cast molding processes suffer from the problem of low productivity due to the very long time required at one stage during the cast molding production process.

The applicants have recognised that one way of improving productivity is to provide a mold which enables a plurality of cast moldings (substrates for information recording media) to be manufactured simultaneously in one process. However, because the uneveness patterns on the mold contain fine detail the molds are expensive to produce. As will be appreciated, molds capable of producing a plurality of castings are significantly more expensive to produce than those which produce only one casting. The high cost of manufacture of molds for producing a plurality of castings is exacerbated by the fact that a defect in only one of the molding patterns on the mold can render the whole mold unusable.

The present invention as described hereinafter is directed to providing a solution to the aforementioned problems associated with cast molding processes.

In one aspect the invention provides a method for preparing a substrate for an information recording medium, which comprises pouring a liquid resin into a mold for cast molding and solidifying the resin, characterised in that the mold has a plurality of units and each of the units has on its surface an uneven preformat pattern corresponding to at least one information recording medium.

In a further aspect the invention provides a mold for cast molding of a substrate for an information recording medium, characterised in that the mold has a plurality of units fixed to a fixing member, and each of the units has on its surface an uneven preformat pattern corresponding to at least one information recording medium.

In the above defined method and mold the patterns of unevenness corresponding to one or more information recording media are formed on respective units which are independent of one another, so that a mold formed from a plurality of units can be prepared at a low cost. If defects are formed on one of the patterns, only the affected unit needs to be exchanged, and this enables the production cost of the information recording medium to be significantly reduced. Because cast molding is used, the resulting medium can be optically isotropic and free from warping, and the resulting product may be readily released from its mold and can exhibit increased durability.

Further features of the invention are defined in the dependent claims.

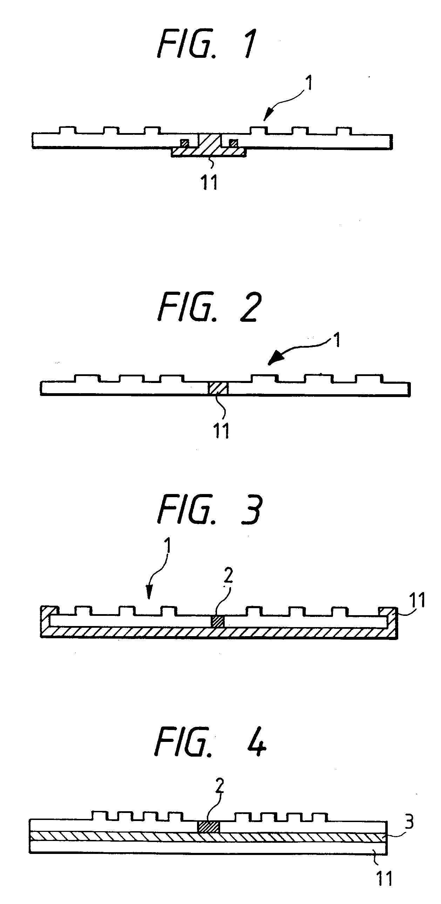

The invention will be further described, by way of example only, with reference to the accompanying drawings in which figures 1 to 4, and figures 10A and 10B are schematic cross-sectional views showing the embodiments of the molds for molding a substrate for information recording medium according to the present invention.

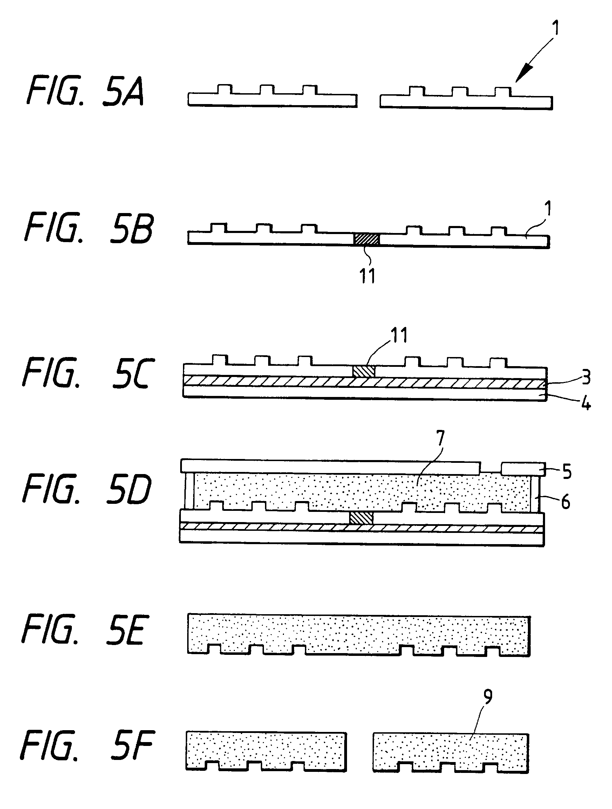

Figures 5A-5F, 6A-6E, 7A-7F, 8A-8F, 9A-9E, and 11A-11E are schematic cross-sectional views showing the embodiments of the methods for preparing substrates for information recording medium according to the present invention.

### DETAILED DESCRIPTION OF THE PREFERRED EMBODIMENT

In the following, the present invention is to be described in detail by use of the drawings.
The present invention is a method for preparing a substrate for information recording medium according to the cast molding method by using, for example, a mold for casting formed of a plural number of units, having cross-sectional shape opposite to the shape of unevenness such as groove for tracking, pits for information of optical recording medium. The mold for casting formed of a plural number of units of the present invention has a structure in which a plural number of units 1 having one or a plurality of uneven preformat pattern 2 are arranged and fixed with a fixing member 11 as shown in Fig. 1, and it is also desirable that each unit 1 may be freely detachable and exchangeable. As the fixing method to be employed here, there is the method in which the units are fixed by screwing through a bonding member 11 as shown in Fig. 1, or the method in which a fixing member 11 is arranged around the units to fix them as shown in Fig. 3. However, it is desirable in these methods that there should be a void generally of 10 mm or less, preferably in the range of 2 to 5 mm, between the units, for thermal expansion by the reaction heat, etc. during working of the resin for casting, precision of registration and further as the cutting portion of the molded product. When the resin for casting is penetrated into the void portions between the units to be solidified therein, a substrate having projections is prepared, but absence of such projection is preferable for continuous production of the substrate for information recording medium, and further preferable with respect to mold releasability of the mass of the cured substrates for information recording medium form the mold for molding.

Accordingly, when the void portions between the units are embedded with a fixing member 11 as shown in Fig. 1, it is preferable that the resin for casting should be sealed from being leaked out with the fixing member, or alternatively with the sealing material 2 when a member for backing is used as the fixing member as shown in Fig. 4. The sealing material 2 (including the fixing member which acts as the sealing member) should be preferably one which is not corroded by the resin for casting, and further have a thermal expansion coefficient approximate to the material of the unit or can absorb the thermal expansion coefficient of the unit.

As such materials, there can be employed low melting glasses, low melting metals and resins, depending on the material of the units and the material of the resin for casting.

As the low melting glass, there may be employed those having a difference in thermal expansion coefficient from the unit of 30 x 10⁻⁷/°C or less, preferably 20 x 10⁻⁷/°C or less. For example,PbO-SiO₂-ZnO system, PbO-Al₂O₃-SiO₂-ZnO system, vanadium phosphate system glasses may be employed.

As the low melting metal, metals having a melting point of 300 °C or lower may be employed, for example, eutectic solder, Pb, In, Sn and alloys thereof, but it is preferable to use an eutectic solder, In, etc. in view of releasability from the resin to be used for casting and modulus of elasticity.

As the resin, either one of thermoplastic resin or thermosetting resin can be used, provided that it has solvent resistance not corroded by the resin for casting. For example, there can be used as the thermoplastic resin vinyl resin, styrene resin, acrylic resin, polycarbonate resin, acetate resin, polyester resin, imide resin, fluorine type resin, olefinic resin, and as the thermosetting resin, phenol resin, melamine resin, epoxy resin, urea resin, polyester resin, etc.

Further, among these, resins having a Young's modulus of 2 to 300 kg/cm², particularly 2 to 80 kg/cm², may be preferably employed. That is, by making the Young's modulus 2 kg/cm² or higher, no deformation will occur even under a minute pressure applied during injection of the liquid resin for casting, while various stresses applied during molding can be absorbed by making the Young's modulus 300 kg/cm² or less.

Further, in view of mold releasability from the resin for cast molding, mold releasability can be improved by use of a sealing material having a contact angle, as measured with water, of 100° or higher, and as such resins, silicone resins or fluorine type resins may preferably employed, but in case of a material other than such resins the mold releasability can be improved by applying the mold release treatment to the members.

As the method for applying the mold release treatment to the resin, it can be practiced by the method of coating or vapor depositing a mold release agent thereon.

As the mold release agent, in the case of coating, for example, fluorine type resins, olefinic resin, silicone resins, etc. may be employed. Also, a plasma polymerized film of the monomers for these resins may be appropriately employed. It is also possible to use an adhesive as the resin, such as acrylic adhesives, urethane type, polysulfide type, butyl type, styrene-butadiene rubber type, polyvinyl chloride type, chloroprene rubber type, chlorosulfonated polyethylene type, ethylene-propylene rubber type adhesives, etc. Mixtures of these may be also available.

Of these adhesives, as the adhesive particularly excellent in heat resistance and solvent resistance, epoxyacrylate type adhesives or adhesives containing epoxyacrylate may be particularly preferred.

Whereas, among the above members, low melting glass, low melting metal and adhesive can singly also function as both the sealing material and the fixing member. For example, a mold for cast molding of the present invention can be obtained without use of another fixing member such as the member for backing as shown in Fig. 2.

When the mold for cast molding formed of a plural number of units of the present invention is prepared by bonding after correction of the relative positions of the respective units, the mass of the substrates for information recording medium obtained with this mold can be applied with, for example, the printing steps of recording layer without cutting the mass into individual substrates for information recording medium, whereby productivity can be further improved. As the method for preparing such a mold, for example, the units can be adhered by use of the member for backing 4 as shown in Fig. 4 as the fixing member 11 and a UV-ray curable type adhesive as the adhesive 3. More specifically, when an adhesive of, for example, the thermosetting type is used as the adhesive to be used for this fixing, there ensues the problem of misregister by the stress due to shrinkage of the cured resin. Accordingly, as the characteristic of such adhesive, it is required to fix quickly without misregister after registration. As a kind of such adhesive, UV-ray curable type adhesives can be used. When the UV-ray curable type adhesive is under uncured state, a plural number of units for molding (hereinafter written as unit) having unevenness such as groove for tracking, pits for information on the surface are arranged in the member for backing with registration by correcting the positions between said units before curing of the above UV-ray curable type adhesive to fix the arrangement. Subsequently, by filling the gaps between the units with a sealing material, a more preferable mold for cast molding according to the present invention can be obtained.

As another method, registration between the respective units is effected by use of an implement etc., the gaps between the units are filled and fixed with a low melting glass, low melting metal or adhesive, followed by removal of the implement, to give the product as such or after adhesion of a member for backing.

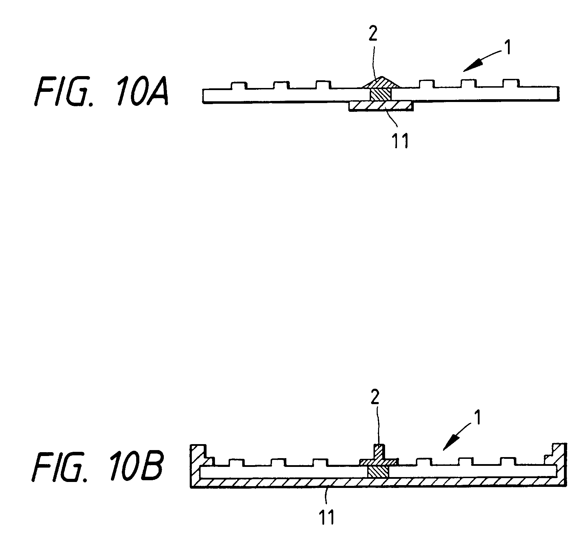

Further, when the fixing member or the sealing material for sealing the voids between the units is made the protruded portion protruded from the surfaces of the respective units as shown in Fig. 10 in the present invention, the portions corresponding to the above fixed portions of the mass of the substrates for information recording medium prepared become concave portions, and by forming to a thickness not thicker than the thickness of the substrate, flash generated between the respective units in the substrate formed of a plural number of units can be prevented, whereby inconveniences due to the flash in the preparation steps for a recording medium such as the step of forming a recording layer can be avoided. Also, since the concave portion on the substrate formed by the protruded portion of the mold for cast molding can be utilized as convenient marking in the respective steps for preparation of recording medium, productivity in the preparation steps for a recording medium can be improved.

In the present invention, the material for the unit is not particularly limited, but conventional materials may be employed, including, for example, glass plates, ceramics, metals, etc., and the substrate portion and the pattern portion of the unit may be either of the same or different material.

Whereas, in a unit having a metal film subjected to patterning formed on a glass plate, the metal film is liable to be peeled off if the temperature during sealing or fixing of the gaps between the units is too high. For this reason, it is desirable that the bonding temperature in bonding the units with a low melting glass is 500 °C or lower. When such units are sealed or fixed with a low melting metal, in order to improve adhesion between the glass plate of the unit and the low melting metal, it is preferable to attach a metal film by sputtering, vapor deposition, etc. on the bonding surface of the unit and the low melting metal, namely the side surface of the unit, or the side surface and the back surface of the unit. For such metal film, chromium, titanium, etc. may be employed.

On the other hand, when a fixing member not functioning as the sealing material, for example, a member for backing is employed, its material is not particularly limited, but a broad scope of materials can be employed, preferably the same material as the unit or the material having a thermal expansion coefficient approximate to the unit such as the low melting metal or the low melting glass as described above. For example, a glass plate, ceramics or metal, etc. with good thickness precision and flatness can be used.

The number of uneven preformat patterns formed on these units may be determined depending on the yield, cost, etc. of the substrate for information recording medium prepared by forming groove for tracking, pits for information, etc. For example, the mold for casting in the case of preparing a substrate for optical card is capable of patterning of the two planes by means of a 6-inch laser exposure machine, and therefore the two planes may be used as one unit and said unit can be bonded in plural number, whereby a mold for casting with a number of units multiplied by 2 can be prepared.

Also, in the present invention, the number of units to be fixed may be any of 2 or more. For example, 9 or 12 units can be fixed, or a further greater number of units can be fixed.

By use of the mold for casting prepared as described above, a liquid transparent resin can be injected into the mold for casting in conventional casting method to be solidified, followed by demolding, to give a substrate for information recording medium.

The liquid resin to be injected into the mold for casing in the present invention may be a transparent uncured thermosetting resin, a photocurable resin or unpolymerized thermoplastic resin. For example, the thermosetting resin may include phenol resin, epoxy resin, polyester resin, etc., while the thermoplastic resin may include vinyl resin, styrene resin, acrylic resin, polycarbonate resin, acetate resin, polyester resin, etc.

As described above, by the mold for molding of the substrate for information recording medium and the method for preparing the substrate for information recording medium according to the present invention, the units having uneven patterns on the surface corresponding to the uneven preformat pattern on the substrate for information recording medium are mutually bonded to each other to give a mold for casting, whereby the substrates for information recording medium in proportion to the number of units bonded by one pass molding process can be prepared, and also the units will receive no damage by mechanical shock received during molding working owing to bonding mutually between the units. Further, since the member for bonding the units to each other has excellent releasability relative to the resin to be cast molded, demolding after cast molding can be done with ease. Thus, the present invention can provide a mold for molding and a method for preparation thereof, which can prepare substrates for information recording medium having flat and smooth surface, which is optically isotropic without warping, with improved durability of the mold for casting.

### Example 1

A mold for molding according to the present invention is to be described by referring to Fig. 1.

1 is a unit with a size of 12.5 cm x 12.5 cm comprising a nickel plate having a groove for tracking and pits for information formed by laser cut on the surface. With this as one unit, a plural number of units were prepared. Next, these units 1 were bonded with a bonding member 8. The bonding member 11 is made of aluminum die cast and fixed with a bolt. Also, this fixing member is a member subjected sufficiently to sealing so that no liquid resin during casting will not be leaked out, and each unit is exchangeable by removing the bolt.

By use of the mold for cast molding obtained as described above, a resin with the following composition was injected and polymerization was carried out at 130 °C for 6 hours to prepare a mass of the substrates for information recording medium.

| [Formulated composition] | |
|---|---|
| Methyl methacrylate | 70 parts by weight |
| tert-Butyl methacrylate | 25 parts by weight |
| Polyethylene glycol dimethyacrylate (MW 620) | 5 parts by weight |

When the mass of the substrates for information recording medium was cut and its birefringence was examined, phase contrast within a card substrate of 54 mm in length, 86 mm in width and 0.4 mm in thickness was found to be 0.1 to 3 nm, with no warping of the substrate being observed.

### Example 2

The preparation process for the mold for molding according to the present invention is to be described consecutively by referring to Fig. 5.

First, 1 is a unit with a size of 12.5 cm x 12.5 cm comprising nickel plate having a groove for tracking with a width of 3 »m and a pitch of 12»m and an uneven preformat pattern which will become the pit for information formed on the surface, and with this as one unit, a plural number of units were prepared.

Next, the above units were bonded to each other by use of a polyurethane type adhesive as the fixing member 11.

Further, for achieving a positional precision of each unit 1 and a rigidness as the mold, the member for backing 4 may be adhered on the back surface of each unit 1 through the same adhesive 3 as the fixing member 11.

Next, the mold obtained as described above and another glass plate 5 subjected on the surface to optical polishing were arranged as opposed to each other, and a spacer 6 was provided therearound to assemble a cell.

Into said cell was injected as the liquid resin 7 an uncured epoxy resin having the following formulated composition, followed by curing at 100 °C for 10 hours.

| [Formulated composition] | |
|---|---|
| Bisphenol A type epoxy resin | 100 parts by weight |
| Methylhexahydrophthalic anhydride | 88 parts by weight |
| 2-Ethyl-4-methylimidazole | 0.5 part by weight |
| 2,6-Di-tert-butyl-p-cresol | 1.0 part by weight |

Next, after demolded from the mold as shown in Fig. 5E, the substrate formed of a plural number of unit surfaces was cut into predetermined sizes to obtain a substrate 9 for information recording medium (see Fig. 5F).

When the birefringence of the substrate for information recording medium obtained was examined, the phase contrast within a card substrate of 54 mm in length, 86 mm in width and 0.4 mm in thickness was found to be 0.1 to 5 nm, with no warping of the substrate being observed.

### Example 3

Fig. 3 is a sectional view showing the structure of the mold for cast molding to be used in Example 3 of the present invention.

1 is a unit prepared according to the same method as prepared in Examples 1, 2 and 11 shows a frame as the fixing member. Also, for this member, either a metal or a heat-resistant resin can be used. Further, by providing a thickness as the spacer at the outer circumference of the frame, the bonding member and the spacer can be integrated. By use of the mold for cast molding obtained as described above, a substrate was prepared according to the same method as in Example 1.

In the case of this Example 3, bonding of the respective units and the spacer can be integrated. When the birefringence of the substrate for information recording medium was examined, the phase contrast within a card substrate of 54 mm in length, 86 mm in width and 0.4 mm in thickness was found to be 0.1 to 5 nm, with no warping of the substrate being observed.

### Example 4

Example 4 is described by referring to Fig. 5.

1 is a unit comprising a glass plate prepared similarly as in Example 2, and a plural number of the units were prepared.

Next, said units were adhered to each other by use of an acrylic rubber type adhesive controlled to a Young's modulus of 35 kg/cm² during curing of the resin for cast molding at the fixing member 11 to be bonded.

Also, in order to obtain a positional precision of each unit and a rigidness as the mold, it is desirable to adhere the member for backing 4 through the same adhesive 3 as the fixing member 11 on the back of each unit 1. As the member for backing 4, a glass plate having sufficient thickness precision and flatness was used.

Next, with the mold obtained and another glass plate 5 subjected on the surface to optical polishing arranged as opposed to each other through a spacer, a cell was assembled.

Into said cell was injected a liquid epoxy resin having the following formulated composition as the liquid resin, followed by curing at 100 °C for 10 hours.

| [Formulated composition] | |
|---|---|
| Bisphenol A type epoxy resin | 100 parts by weight |
| Methylhexahydrophthalic anhydride | 88 parts by weight |
| 2-Ethyl-4-methylimidazole | 0.5 part by weight |
| 2,6-Di-tertiary-butyl-p-cresol | 1.0 part by weight |

Next, after demolded from the mold, the substrate formed of a plural number of unit surfaces was cut into predetermined sizes to obtain a substrate for information recording medium.

When the birefringence of the substrate for information recording medium obtained was examined, the phase contrast within a card substrate of 54 mm in length, 86 mm in width and 0.4 mm in thickness was found to be 0.1 to 5 nm, with no warping of the substrate being observed.

### Example 5

Into the cell assembled similarly as in Example 4, a resin having the following composition was injected and polymerization was carried out at 130 °C for 6 hours, and following otherwise the same procedure as in Example 4, a substrate for information recording medium was obtained.

When the birefringence of the substrate for information recording medium obtained was examined, the phase contrast within a card substrate of 54 mm in length, 86 mm in width and 0.4 mm in thickness was found to be 0.1 to 3 nm, with no warping of the substrate being observed.

| [Formulated composition] | |
|---|---|
| Methyl methacrylate | 70 parts by weight |
| Tertiary-butyl methacrylate | 25 parts by weight |
| Polyethylene glycol dimethacrylate (MW 620) | 5 parts by weight |

### Comparative example 1

As Comparative example 1, a substrate for cast molding was prepared by use of an epoxy type resin of the bisphenol A type in general as the adhesive, and a substrate was prepared according to the same steps as in Example 4.

When durability of the mold for casting of Example 4 and Comparative example 1 was evaluated, no particular inconvenience occurred even when cast molding was repeated for 100 times, but a part of the units within the mold was peeled off after about 50-th molding, whereby there ensued problem in thickness precision of the substrate.

### Example 6

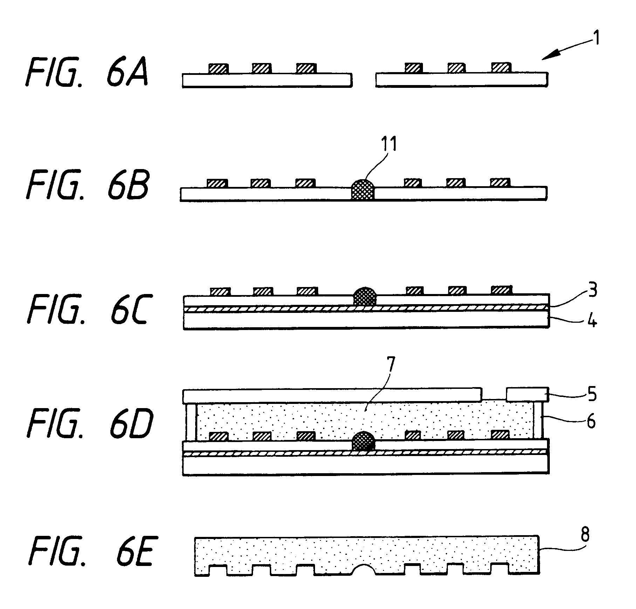

Figs. 6A to 6E illustrate the process showing an example of the method for preparation of the information recording medium of the present invention. All of the Figures show the cross-sections of the substrate.

The preparation process is now described consecutively by referring to the drawings.

First, in Fig. 6A, in a groove of high precision, a plural number of units 1 having chromium film formed on a glass plate according to the photolithographic steps were prepared to provide each one unit.

Next, after correction of the position of the unit, the position of the unit was quickly fixed by use of an implement, and a low melting glass of the PbO-SiO₂-ZnO system was filled as the bonding member in the gaps of about 3 mm in width between the units and heated to 400 °C to melt the low melting glass, thereby effecting fixing and sealing between the units (Fig. 6B).

In this case, when a blue glass plate was used for the unit, since it has a thermal expansion ratio of about 90 to 100 x 10⁻⁷/°C, the thermal expansion ratio of the low melting glass was made 100 to 110 x 10⁻⁷/°C. The low melting glass had a Tg of 320 °C and the bonding temperature was sufficiently 400 °C.

Next, the unit was removed from the implement and a member for backing was adhered by use of Cemedine 1565 (produced by Cemedine K.K.) as the adhesive (Fig. 6C).

Next, as shown in Fig. 6D, the mold obtained as described above another glass plate 5 subjected on the surface to optical polishing were arranged so as to be opposed to each other and a spacer 6 provided therearound to assemble a cell. Into said cell was injected a resin having the following formulated composition as the liquid resin 7, and polymerization was carried out at 120 °C for 10 hours.

| [Formulated composition] | |
|---|---|
| Methyl methacrylate | 70 parts by weight |
| Tertiary-butyl methacrylate | 25 parts by weight |
| Polyethylene glycol dimethacrylate (MW 620) | 5 parts by weight |

Next, as shown in Fig. 6E an information substrate 8 for information recording medium formed of a plural number of units was obtained by demolding from the mold.

When the birefringence of the substrate obtained was examined, the phase contrast was found to be sufficiently small as 0.1 to 0.5 nm within a card substrate of 54 mm in length, 86 mm in width and 0.4 mm in thickness, and there was no warping of the substrate observed.

### Example 7

Figs. 7A to 7F illustrate the process showing an example of the method for preparation of the information recording medium of the present invention. All of the Figures show the cross-sections of the substrate.

The preparation process is now described consecutively by referring to the drawings.

First, in Fig. 7A, in a groove of high precision, a plural number of units 1 having chromium film formed on a glass plate according to the photolithographic steps were prepared to provide each one unit.

As shown in Fig. 7B, the above unit 1 was set in a vacuum chamber and metal film 21 was adhered by spattering on the surface which a Chromium film is not formed. The spattering was conducted by introducing Ar gas of 20 m Torr and at a power of 1kW with a R.F magnetron. Since Chromium was spattered even around the unit by spattering, a Chromium film was adhered simultaneously on the side and back surface.

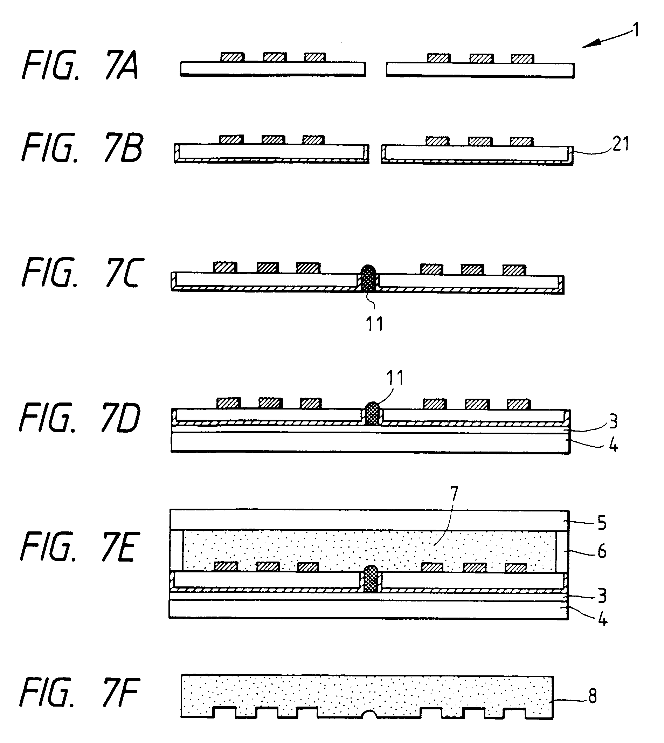

Next, after correction of the position of the unit, the position of the unit was quickly fixed by use of an implement, and the gaps between the units with a width of about 3 mm were bonded with a low melting metal 5. For the low melting metal, an eutectic solder was used, and the eutectic solder was heated to 200 °C to be melted without void into the gaps between the units, thereby effecting fixing and sealing between the units (Fig. 7C).

Next, the unit was removed from the implement and a member for backing was adhered by use of Cemedine 1565 (produced by Cemedine K.K.) as the adhesive (Fig. 7D).

Next, as shown in Fig. 7E, the mold obtained as described above another glass plate 5 subjected on the surface to optical polishing were arranged so as to be opposed to each other and a spacer 6 provided therearound to assemble a cell. Into said cell was injected a resin having the following formulated composition as the liquid resin 7, and polymerization was carried out at 120 °C for 10 hours.

| [Formulated composition] | |
|---|---|
| Methyl methacrylate | 70 parts by weight |
| Tertiary-butyl methacrylate | 25 parts by weight |
| Polyethylene glycol dimethacrylate (MW 620) | 5 parts by weight |

Next, as shown in Fig. 7F, a substrate 8 for information recording medium formed of a plural number of units was obtained by demolding from the mold.

When the birefringence of the substrate obtained was examined, the phase contrast within a card substrate of 54 mm in length, 86 mm in width and 0.4 mm in thickness was sufficiently small as 0.1 to 0.5 nm, and also no warping of the substrate was observed.

### Example 8

By use of Figs. 5A to 5F, an example of the method for preparation of the substrate for information recording medium is shown. All of the Figures show the cross-sections of the substrate.

The preparation process is now described consecutively by referring to the drawings.

First, in Fig. 5A, a plural number of units 1 comprising a glass plate having a groove of high precision formed thereon were prepared to provide them respectively as one unit.

Next, in Fig. 5B, the above units 1 were bonded together with a fixing member 11. In this Example, a silicone adhesive was used for the fixing member, but fluorine resin type adhesives are also available as other Examples. Also, for obtaining the positional precision as each unit 1 and rigidity as the mold, it is desirable to adhere a member for backing through an adhesive 3 such as epoxy type, silicone type, polyester type and acrylic type on the back of each unit 1. As the member for backing 4, a glass plate or metal with good thickness precision and flatness was used.

Next, as shown in Fig. 5C, the mold obtained as described above and another glass plate 5 subjected on the surface to optical polishing were arranged as opposed to each other, and a spacer 6 provided therearound to assemble a cell.

Into cell was injected a liquid epoxy resin having the following formulated composition as the liquid resin 7, followed by curing at 100 °C for 10 hours.

| [Formulated composition] | |
|---|---|
| Bisphenol A type epoxy resin | 100 parts by weight |
| Methylhexahydrophthalic anhydride | 88 parts by weight |
| 2-Ethyl-4-methylimidazole | 0.5 part by weight |
| 2,6-Di-tertiary-butyl-p-cresol | 1.0 part by weight |

Next, after demolded from the mold as shown in Fig. 5D, the substrate formed of a plural number of unit surfaces was cut into predetermined sizes to obtain a substrate 9 for information recording medium (see Fig. 5E).

When the birefringence of the substrate obtained was examined, the phase contrast within a card substrate of 54 mm in length, 86 mm in width and 0.4 mm in thickness was 0.1 to 5 nm, without striae, etc. due to poor mold releasability of the substrate, and no warp was also observed.

### Example 9

A plural number of units comprising a nickel plate having a groove for tracking and pits for information formed by laser cut on the surface were prepared, and these units were bonded with a fixing member. The fixing member is made of, for example, a silicone resin, Teflon resin, etc., each of which has a contact angle of 100° or lower, and which is a member enabling sufficient sealing so that no liquid resin will be leaked out during cast molding, and also has a detachable structure.

By use of the mold for molding obtained as described above, a cell was assembled similarly as described in Example 1, and an acrylic resin having the following formulated composition was injected thereinto as the liquid resin, followed by polymerization at 130 °C for 6 hours.

| [Formulated composition] | |
|---|---|
| Methyl methacrylate | 70 parts by weight |
| Tertiary-butyl methacrylate | 25 parts by weight |
| Polyethylene glycol dimethacrylate (MW 620) | 5 parts by weight |

Next, after demolding from the mold, the substrate formed of a plural number of units was cut into predetermined sizes to obtain a substrate for information recording medium.

When the birefringence of the information recording medium was examined similarly as in Example 1, the phase contrast within a card substrate was found to be 0.1 to 3 nm, without striae, etc. due to poor mold releasability of the substrate, and no warp was observed.

The following Table 1 shows evaluation when various members for bonding the units are employed.

From the Table, it can be seen that the evaluation is 90 for adhesives of the fluorine type and the silicone type with a contact angle with water of 100° or more, but the evaluation for the adhesives with the contact angle of less than 100° of the ethylene type et seq is 65 or less to give poor yield.

**Table 1**

| Bonding member | Contact angle (water) | Evaluation |
|---|---|---|
| Fluorine type | 120° | 90 |
| Silicone type | 110° | 90 |
| Ethylene type | 98° | 65 |
| Epoxy type | 89° | 50 |
| Acryl type | 83° | 45 |
| Nylon type | 76° | 35 |
| * Evaluation was performed by examining presence of striae, presence of warp for the total number of substrates, and the yield of acceptable substrates is shown in %. | | |

The contact angle in the present invention is a value measured in a room maintained at 20 ± 2 °C by use of a Contact-Angle Meter CA-D (produced by Kyowa Kaimen Kagaku).

### Example 10

Figs. 8A to 8F illustrate the process showing an example of the method for preparation of the information recording medium of the present invention. All of the Figures show the cross-sections of the substrate.

The preparation process is now described consecutively by referring to the drawings.

First, in Fig. 8A, a plural number of units 1 comprising a glass plate having a groove of high precision formed according to the photolithographic steps were prepared to provide them respectively as one unit.

Next, in Fig. 8B, by use of the adhesive 3, the above units 1 were arranged on a member for backing which was the fixing member. As the UV-ray curable type adhesive, Locktite UV-ray curable type adhesive LI-298-661 (produced by Nippon Locktite K.K.), a photocurable type adhesive Diabond DA855G, UV130 (produced by Nogawa Chemical K.K.), etc. can be used.

Also, as the fixing member 11, a glass substrate with good thickness precision and flatness can be used.

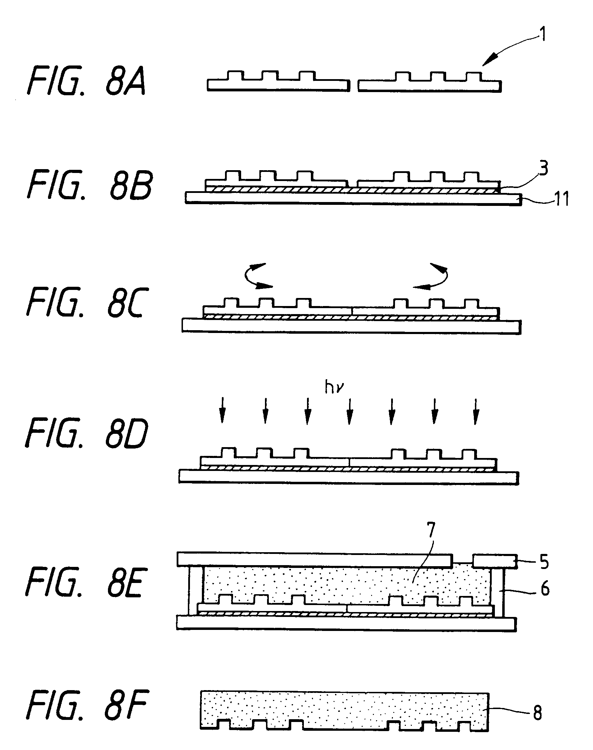

Next, as shown in Fig. 8C, after effecting registration by correcting the positions of the units, as shown in Fig. 8D, UV-ray is irradiated quickly to fix the positions of the units. At this time, UV-ray may be irradiated in either direction from the unit side or from the member side for backing, but it is required that the side to be irradiated should be made transmissive of UV-ray.

Next, as shown in Fig. 8E, the mold obtained as described above and another glass plate 5 subjected on the surface to optical polishing are arranged as opposed to each other and a spacer 6 provided therearound to assemble a cell. Into said cell was injected a liquid acryl resin having the following formulated composition as the liquid resin 7 followed by curing at 120 °C for 10 hours.

| [Formulated composition] | |
|---|---|
| Methyl methacrylate | 70 parts by weight |
| Tertiary-butyl methacrylate | 25 parts by weight |
| Polyethylene glycol dimethacrylate (MW 620) | 5 parts by weight |

Next, as shown in Fig. 8F, a substrate for information recording medium 8 was obtained by demolding from the mold.

When birefringence of the substrate for information recording medium obtained was examined, the phase contrast within a card of 54 mm in length, 86 mm in width and 0.4 mm in thickness was found to be 0.1 to 5 nm, without warping of the substrate being observed.

Also, since the uneven preformats formed on the mass 8 of the substrates for information recording medium are each subjected to registration, recording layers could be formed before cutting into individual substrates for information recording medium, whereby productivity could be further improved.

### Example 11

Figs. 9A to 9E illustrate the process showing an example of the method for preparation of the information recording medium of the present invention. All of the Figures show the cross-sections of the substrate.

The preparation process is now described consecutively by referring to the drawings.

First in Fig. 9A, a plural number of units 1 comprising a glass plate having a groove of high precision formed according to the photolithographic steps were prepared to provide them respectively as one unit.

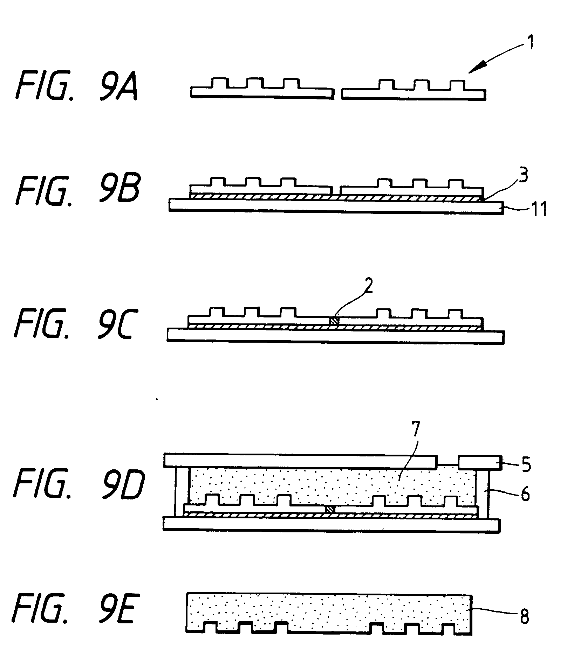

Next, in Fig. 9B, by use of the adhesive 3, the above units 1 were arranged on a member for backing which was the fixing member 11.

As the adhesive, UV-1000 which is an epoxy acrylate type adhesive produced by Sony Chemical K.K.was employed.

As the member for backing 11, a glass plate with good thickness precision and flatness was employed.

Next, after the position of the unit was corrected, UV-ray was quickly irradiated to fix the position of the unit. At this time, UV-ray may be irradiated in either direction from the unit side or from the member side for backing, but it is required that the side to be irradiated should be made transmissive of UV-ray.

Next, as shown in Fig. 9C, a sealing material 2 was filled in the gaps of about 3 mm in width between the units. As the sealing material, an epoxy acrylate type UV-1000 was used. After filling, the sealing material was cured by irradiation of UV-ray.

Next, as shown in Fig. 9D, the mold obtained as described above and another glass plate 5 subjected on the surface to optical polishing were arranged so as to be opposed to each other, and a spacer 6 provided therearound to assemble a cell.

Into said cell was injected a liquid acrylic resin having the following formulated composition as the liquid resin 7, followed by curing at 120 °C for 10 hours.

| [Formulated composition] | |
|---|---|
| Methyl methacrylate | 70 parts by weight |
| Tertiary-butyl methacrylate | 25 parts by weight |
| Polyethylene glycol dimethacrylate (MW 620) | 5 parts by weight |

Next, as shown in Fig. 9E, a substrate for information recording medium 8 was obtained by demolding from the mold.

When birefringence of the substrate for information recording medium obtained was examined, the phase contrast within a card of 54 mm in length, 86 mm in width and 0.4 mm in thickness was found to be 0.1 to 5 nm, with no warping of the substrate being observed.

### Example 12

Figs. 9A to 9E illustrate the process showing an example of the method for preparation of the substrate for information recording medium of the present invention. All of the Figures show the cross-sections of the substrate.

The preparation process is now described consecutively by referring to the drawings.

First in Fig. 9A, a plural number of units 1 comprising a glass plate having a groove of high precision formed according to the photolithographic steps were prepared to provide them respectively as one unit.

Next, in Fig. 9B, by use of the adhesive 3, the above units were arranged on a fixing member 11. At this time, as the adhesive, Locktite UV-ray curable type adhesive LI-298, 661, etc. were employed.

As the fixing member 11, a glass plate with good thickness precision and flatness was employed.

Next, after the position of the unit was corrected, UV-ray was quickly irradiated to fix the position of the unit. At this time, UV-ray may be irradiated in either direction from the unit side or from the member side for backing, but it is required that the side to be irradiated should be made transmissive of UV-ray.

Next, as shown in Fig. 9C, a sealing material 2 was filled in the gaps of about 2.5 mm in width between the units. As the thermosetting resin, a bismaleimide-triazine resin (produced by Mitsubishi Gas Kagaku K.K.) was employed. After defoaming, filling and further defoaming, heating was effected at 80 °C for 6 hours, then the temperature was elevated from 80 °C to 175 °C in 2 hours, followed by heating at 175 °C for 8 hours to cure the resin.

Next, as shown in Fig. 9D, the mold obtained as described above and another glass plate 5 subjected on the surface to optical polishing were arranged so as to be opposed to each other, and a spacer 6 was provided therearound to assemble a cell.

Into said cell was injected a liquid acrylic resin having the following composition as the liquid resin 7, followed by curing at 120 °C for 10 hours.

| [Formulated composition] | |
|---|---|
| Methyl methacrylate | 70 parts by weight |
| Tertiary-butyl methacrylate | 25 parts by weight |
| Polyethylene glycol dimethacrylate (MW 620) | 5 parts by weight |

Next, as shown in Fig. 9E, the product was demolded from the mold to give a substrate for information recording medium 8.

When birefringence of the substrate for information recording medium obtained was examined, the phase contrast within a card of 54 mm in length, 86 mm in width and 0.4 mm in thickness was found to be 0.1 to 5 nm, with no warping of the substrate being observed.

### Example 13

Figs. 9A to 9E illustrate the process showing an example of the method for preparation of the substrate for information recording medium of the present invention. All of the Figures show the cross-sections of the substrate.

The preparation process is now described consecutively by referring to the drawings.

First, in Fig. 9A, a plural number of units 1 comprising a glass plate having a groove of high precision formed according to the photolithographic steps were prepared to provide them respectively as one unit.

Next, in Fig. 9B, by use of the adhesive 3, the above units were arranged on a fixing member 11. At this time, as the adhesive, Diabond BA855G, UV 130 of the UV-ray curable type adhesive (produced by Nogawa Chemical K.K.), etc. were employed.

As the fixing member 11, a glass plate with good thickness precision and flatness was employed.

Next, after the position of the unit was corrected, UV-ray was quickly irradiated to fix the position of the unit. At this time, UV-ray may be irradiated in either direction from the unit side or from the member side for backing, but it is required that the side to be irradiated should be made transmissive of UV-ray.

Next, as shown in Fig. 9C, a sealing material 2 was filled in the gaps of about 3.5 mm between the units. As the thermoplastic resin, Sony Bond SC608 (produced by Sony Chemical K.K.) was employed. After filling, the resin was solidified by heating at 100 °C for 180 minutes.

Next, as shown in Fig. 9D, the mold obtained as described above and another glass plate 5 subjected on the surface to optical polishing were arranged so as to be opposed to each other, and a spacer 6 was provided therearound to assemble a cell.

Into said cell was injected a liquid epoxy resin having the following formulated composition as the liquid resin 7, followed by curing at 100 °C for 10 hours.

| [Formulated composition] | |
|---|---|
| Bisphenol A type epoxy resin | 100 parts by weight |
| Methylhexahydrophthalic anhydride | 88 parts by weight |
| 2-Ethyl-4-methylimidazole | 0.5 part by weight |
| 2,6-Di-tert-butyl-p-cresol | 1.0 part by weight |

Next, as shown in Fig. 1E, the product was demolded from the mold to give a substrate for information recording medium 8.

When the birefringence of the substrate for information recording medium obtained was examined, the phase contrast within a card substrate of 54 mm in length, 86 mm in width and 0.4 mm in thickness was found to be 0.1 to 5 nm, with no warping of the substrate being observed.

### Example 14

Figs. 9A to 9E illustrate the process showing an example of the method for preparation of the substrate for information recording medium of the present invention. All of the Figures show the cross-sections of the substrate.

The preparation process is now described consecutively by referring to the drawings.

First, in Fig. 9A, a plural number of units 1 comprising a glass plate having a groove of high precision formed according to the photolithographic steps were prepared to provide them respectively as one unit.

Next, in Fig. 9B, by use of the adhesive 3, the above units were arranged on a fixing member 11. At this time, as the adhesive, Diabond DA855G of the UV-ray curable type adhesive (produced by Nogawa Chemical K.K) was employed.

As the fixing member 11, a glass plate with good thickness precision and flatness was employed.

Next, after the position of the unit was corrected, UV-ray was quickly irradiated to fix the position of the unit. At this time, UV-ray may be irradiated in either direction from the unit side or from the member side, but it is required that the side to be irradiated should be made transmissive of UV-ray.

Next, in Fig. 9C, the gaps of about 4 mm in width between the units were sealed with a sealing material 2. As the sealing material, Sony Bond UV1000 (an acrylic resin, produced by Sony Chemical) was employed. After filling, the resin was cured by irradiation of UV-ray.

On the sealing material, as shown in Fig. 9D , Frekote 44 produced by Fricoat Co., USA, was applied to a thickness of about 4 mm, followed by drying, thus applying mold release treatment, to form a mold released portion 5.

Next, as shown in Fig. 9D, the mold obtained as described above and another glass plate 5 subjected on the surface to optical polishing were arranged so as to be opposed to each other, and a spacer 6 was provided therearound to assemble a cell.

Into said cell was injected a liquid acrylic resin having the following formulated composition, followed by curing at 120 °C for 10 hours.

| [Formulated composition] | |
|---|---|
| Methyl methacrylate | 70 parts by weight |
| Tertiary-butyl methacrylate | 25 parts by weight |
| Polyethylene glycol dimethacrylate (MW 620) | 5 parts by weight |

Next, as shown in Fig. 9E, the product was demolded from the mold to give a substrate for information recording medium 8. The mold releasability was good, and the connecting portion of the substrate corresponding to the portion between the units was found to be smooth without any projection.

When birefringence of the substrate for information recording medium obtained was examined, the phase contrast within a card substrate of 54 mm in length, 86 mm in width and 0.4 mm in thickness was found to be 0.1 to 5 nm, with no warping of the substrate being observed. There was no striae of the substrate due to poor releasability, neither.

### Example 15

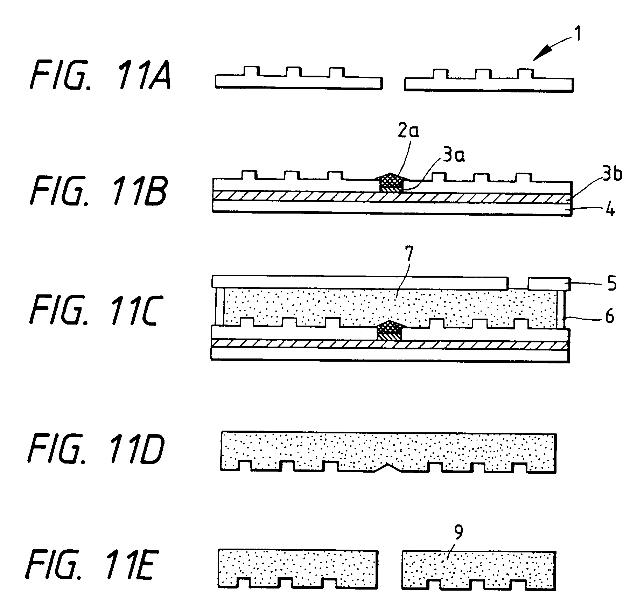

Figs. 11A to 11E illustrate the process showing an example of the method for preparation of the substrate for information recording medium of the present invention. All of the Figures show the cross-sections of the substrate.

The preparation process is now described consecutively by referring to the drawings.

First, in Fig. 11A, a plural number of units 1 comprising a glass plate having a groove of high precision formed according to the photolithographic steps were prepared to provide them respectively as one unit.

Fig.11B shows a mold for casting having the above units 1 adhered to each other with an adhesive 3a. As the kind of the adhesive, one having adhesiveness to glass plate, and also having too firm adhesive force is not suitable for making exchange of units easier. In this Example, an acrylic rubber type adhesive was used, but a urethane type adhesive, a polysulfide type adhesive may be also available. Also, for exhibiting positional precision and rigidity as the mold of each unit 1, it is desirable to adhere a member 4 for backing through the same adhesive 3b as the adhesive 3a on the back of each unit 1. And, prior to curing of the adhesive 3a, a sealing member 2a for protrusion was adhered thereon to form a protruded portion. As the material for the member for protrusion 2a, a heat-resistant resin, glass or metal may be employed. This mold may be subjected to mold release treatment, if desired, to provide a mold for casting.

Next, as shown in Fig. 11C, the mold obtained as described above and another glass plate 5 subjected on the surface to optical polishing were arranged so as to be opposed to each other and a spacer 6 provided therearound to assemble a cell.

Into said cell was injected a liquid epoxy resin having the following formulated composition as the liquid resin 7, followed by curing at 100 °C for 10 hours.

| [Formulated composition] | |
|---|---|
| Bisphenol A type epoxy resin | 100 parts by weight |
| Methylhexahydrophthalic anhydride | 88 parts by weight |
| 2-Ethyl-4-methylimidazole | 0.5 part by weight |
| 2,6-Di-tert-butyl-p-cresol | 1.0 part by weight |

Next, after the product was demolded from the mold as shown in Fig. 11D, the substrate formed of a plural number of units was cut into predetermined sizes to obtain a substrate for information recording medium 9. (see Fig. 11E).

When the birefringence of the substrate for information recording medium obtained was examined, the phase contrast within a card substrate of 54 mm in length, 86 mm in width and 0.4 mm in thickness was found to be 0.1 to 5 nm, with no warping of the substrate being observed.

The substrate prepared as described above, on which marking is applied with the members for protrusion 2a, can utilize them as the marks for registration in the respective steps during preparation of the recording medium.

## Claims

1. A method for preparing a substrate (9) for an information recording medium, which comprises pouring a liquid resin into a mold for cast molding and solidifying the resin, characterised in that said mold has a plurality of units (1) and each of the units has on its surface an uneven preformat pattern corresponding to at least one information recording medium.

2. A method according to claim 1, wherein there is used a mold for cast molding formed by fixing said units onto a fixing member by use of an adhesive.

3. A method according to claim 2, wherein said adhesive is a UV-ray curable type adhesive.

4. A method according to claim 3, wherein the mold for cast moulding is formed by arranging a plurality of said units on the fixing member in registration when said UV-ray curable adhesive is in its uncured state and then curing the adhesive to fix the units on the fixing member.

5. A method according to any of claims 1 to 4, wherein a mold for cast molding having voids provided between said units is used.

6. A method according to claim 5, wherein said voids are 10 mm or less.

7. A method according to claim 6, wherein said voids are 2 to 5 mm.

8. A method according to claim 5, 6 or 7 wherein said voids are sealed with a sealing material.

9. A method according to claim 8, wherein a mold release treatment is applied on said sealing material.

10. A method according to claim 8, wherein said sealing material is the fixing member.

11. A mold for cast molding of a substrate (9) for an information recording medium, characterised in that the mold has a plurality of units (1) fixed to a fixing member (11) and each of the units (1) has on its surface an uneven preformat pattern corresponding to at least one information recording medium.

12. A mold according to claim 11, wherein each of said units (1) is detachable.

13. A mold according to claim 11, wherein said units are adhered to a backing member.

14. A mold according to claim 13, wherein said backing member is the fixing member.

15. A mold according to claim 11, wherein said units are adhered to said fixing member with a UV-ray curable type adhesive.

16. A mold according to any of claims 11 to 15 having voids between said units (1).

17. A mold according to claim 16, wherein said voids are 10 mm or less.

18. A mold according to claim 17, wherein said voids are 2 to 5 mm.

19. A mold according to claim 16, 17 or 18, wherein the voids are sealed with a sealing material.

20. A mold according to claim 19, wherein said sealing material is a fixing member.

21. A mold according to claim 19, wherein a mold release treatment is applied on said sealing material.

22. A mold according to claim 19, wherein said sealing material is not corroded by the resin for cast molding.

23. A mold according to claim 22, wherein said sealing material is a low melting glass.

24. A mold according to claim 23, wherein the difference between the thermal expansion ratio of said low melting glass and the thermal expansion ratio of the units is 30 x 10⁻⁷/°C or less.

25. A mold according to claim 24, wherein the difference between the thermal expansion ratio of said low melting glass and the thermal expansion ratio of the units is 20 x 10⁻⁷/°C or less.

26. A mold according to claim 22, wherein said sealing material is a low melting metal.

27. A mold according to claim 26, wherein the melting point of said low melting metal is 300°C or lower.

28. A mold according to claim 22, wherein said sealing material is a resin.

29. A mold according to claim 28, wherein said resin is a thermosetting resin.

30. A mold according to claim 29, wherein said resin is an adhesive.

31. A mold according to claim 30, wherein said adhesive is an epoxy acrylate type adhesive.

32. A mold according to claim 28, wherein said resin has a Young's modulus of 2 to 300 kg/cm².

33. A mold according to claim 32, wherein said resin has a Young's modulus of 2 to 80 kg/cm².

34. A mold according to claim 19, wherein said sealing material is a material having a contact angle as measured with water of 100° or more.

35. A mold according to claim 19, wherein said sealing material is protruded from the surface of said units.

36. A method for preparing a substrate for an information recording medium which comprises pouring a liquid resin into a mold as claimed in any preceding claim and allowing the resin to solidify.

## Patentansprüche

1. Verfahren zur Herstellung eines Trägers (9) für Informationsspeicherung, umfassend das Gießen eines flüssigen Harzes in eine Form für das Formgießen und Verfestigen des Harzes, **dadurch gekennzeichnet,** daß die Form eine Vielzahl von Einheiten (1) hat und daß jede dieser Einheiten auf ihrer Oberfläche ein ungleichmäßiges vorgeformtes Muster hat, das wenigstens einer Informationsspeicherung entspricht.

2. Verfahren nach Anspruch 1, wobei eine Form für das Formgießen verwendet wird, die gebildet wird, indem die Einheiten an einem Befestigungsteil mit einem Haftmittel befestigt werden.

3. Verfahren nach Anspruch 2, wobei das Haftmittel ein durch UV-Strahlen härtbares Haftmittel ist.

4. Verfahren nach Anspruch 3, wobei die Form für das Formgießen gebildet wird, indem die Vielzahl von Einheiten auf dem Befestigungsteil lagegenau angeordnet werden, wenn das durch UV-Strahlen härtbare Haftmittel in ungehärtetem Zustand ist und anschließend das Haftmittel gehärtet wird, um die Einheiten auf dem Befestigungsteil zu befestigen.

5. Verfahren nach einem der Ansprüche 1 bis 4, wobei eine Form für das Formgießen verwendet wird, die Aussparungen hat, die zwischen den Einheiten vorgesehen sind.

6. Verfahren nach Anspruch 5, wobei die Aussparungen 10mm oder weniger betragen.

7. Verfahren nach Anspruch 6, wobei die Aussparungen 2 bis 5mm betragen.

8. Verfahren nach einem der Ansprüche 5, 6 oder 7, wobei die Aussparungen mit einem Dichtmaterial versiegelt werden.

9. Verfahren nach Anspruch 8, wobei das Dichtmaterial mit einer Formtrennbehandlung versehen wird.

10. Verfahren nach Anspruch 8, wobei das Dichtmaterial das Befestigungsteil ist.

11. Form für das Formgießen eines Trägers (9) für Informationsspeicherung, **dadurch gekennzeichnet**, daß die Form eine Vielzahl von Einheiten (1) hat, die an einem Befestigungsteil (11) befestigt sind, und daß jede der Einheiten (1) auf ihrer Oberfläche ein ungleichmäßiges vorgebildetes Muster hat, das wenigstens einer Informationsspeicherung entspricht.

12. Form nach Anspruch 11, wobei jede der Einheiten (1) abnehmbar ist.

13. Form nach Anspruch 11, wobei die Einheiten an einem Stützteil befestigt sind.

14. Form nach Anspruch 13, wobei das Stützteil das Befestigungsteil ist.

15. Form nach Anspruch 11, wobei die Einheiten an dem Befestigungsteil mit einem durch UV-Strahlen härtbaren Haftmittel befestigt sind.

16. Form nach einem der Ansprüche 11 bis 15, die zwischen den Einheiten (1) Aussparungen hat.

17. Form nach Anspruch 16, wobei die Aussparungen 10mm oder weniger betragen.

18. Form nach Anspruch 17, wobei die Aussparungen 2 bis 5mm betragen.

19. Form nach den Ansprüchen 16, 17 oder 18, wobei die Aussparungen mit einem Dichtmaterial versiegelt sind.

20. Form nach Anspruch 19, wobei das Dichtmaterial das Befestigungsteil ist.

21. Form nach Anspruch 19, wobei das Dichtmaterial mit einer Formtrennbehandlung versehen worden ist.

22. Form nach Anspruch 19, wobei das Dichtmaterial durch das Harz für das Formgießen nicht korrodiert wird.

23. Form nach Anspruch 22, wobei das Dichtmaterial ein niedrig schmelzendes Glas ist.

24. Form nach Anspruch 23, wobei die Differenz zwischen dem thermischen Expansionsverhältnis des niedrig schmelzenden Glases und dem thermischen Expansionsverhältnis der Einheiten 30 x 10⁻⁷/ °C oder weniger ist.

25. Form nach Anspruch 24, wobei die Differenz zwischen dem thermischen Expansionsverhältnis des niedrig schmelzenden Glases und dem thermischen Expansionsverhältnis der Einheiten 20 x 10⁻⁷/ °C oder weniger ist.

26. Form nach Anspruch 22, wobei das Dichtmaterial ein niedrig schmelzendes Metall ist.

27. Form nach Anspruch 26, wobei der Schmelzpunkt des niedrig schmelzenden Metalls 300°C oder weniger ist.

28. Form nach Anspruch 22, wobei das Dichtmaterial ein Harz ist.

29. Form nach Anspruch 28, wobei das Harz ein härtbares Harz ist.

30. Form nach Anspruch 29, wobei das Harz ein Haftmittel ist.

31. Form nach Anspruch 30, wobei das Haftmittel ein Epoxyacrylat-Haftmittel ist.

32. Form nach Anspruch 28, wobei das Harz einen Young'schen Elastizitätsmodul von 2 bis 300 kg/cm² hat.

33. Form nach Anspruch 32, wobei das Harz einen Young'schen Elastizitätsmodul von 2 bis 80 kg/cm² hat.

34. Form nach Anspruch 19, wobei das Dichtmaterial ein Material ist, das mit Wasser gemessen einen Kontaktwinkel von 100° oder mehr hat.

35. Form nach Anspruch 19, wobei das Dichtmaterial von der Oberfläche der Einheiten vorspringt.

36. Verfahren zur Herstellung eines Trägers für Informationsspeicherung, umfassend das Gießen eines flüssigen Harzes in eine Form nach einem der vorstehenden Ansprüche und das Verfestigenlassen des Harzes.

## Revendications

1. Procédé de préparation d'un substrat (9) pour un support d'enregistrement d'informations, qui comprend l'étape consistant à verser une résine liquide dans un moule pour un moulage par coulée et la solidification de la résine, caractérisé en ce que ledit moule possède plusieurs unités (1) et chacune des unités possède sur sa surface un motif de préformat irrégulier correspondant à au moins un support d'enregistrement d'informations.

2. Procédé suivant la revendication 1, dans lequel on utilise un moule pour le moulage par coulée, formé par fixation des unités sur un élément de fixation au moyen d'un adhésif.

3. Procédé suivant la revendication 2, dans lequel l'adhésif est un adhésif durcissable par un rayonnement UV.

4. Procédé suivant la revendication 3, dans lequel le moule pour le moulage par coulée est formé en plaçant plusieurs desdites unités sur l'élément de fixation en coïncidence lorsque l'adhésif durcissable par un rayonnement UV est à l'état non durci, puis par durcissement de l'adhésif pour fixer les unités sur l'élément de fixation.

5. Procédé suivant l'une quelconque des revendications 1 à 4, dans lequel un moule pour le moulage par coulée possédant des vides ménagés entre lesdites unités est utilisé.

6. Procédé suivant la revendication 5, dans lequel les vides ont des dimensions égales ou inférieures à 10 mm.

7. Procédé suivant la revendication 6, dans lequel les vides ont des dimensions de 2 à 5 mm.

8. Procédé suivant la revendication 5, 6 ou 7, dans lequel les vides sont rendus étanches avec une matière d'étanchéité.

9. Procédé suivant la revendication 8, dans lequel un traitement de démoulage est appliqué à la surface de la matière d'étanchéité.

10. Procédé suivant la revendication 8, dans lequel la matière d'étanchéité est l'élément de fixation.

11. Moule pour le moulage par coulée d'un substrat (9) pour un support d'enregistrement d'informations, le moule étant caractérisé en ce qu'il possède plusieurs unités (1) fixées à un élément de fixation (11) et chacune des unités (1) possède sur sa surface un motif de préformat irrégulier correspondant à au moins un support d'enregistrement d'informations.

12. Moule suivant la revendication 11, dans lequel chacune des unités (1) est détachable.

13. Moule suivant la revendication 11, dans lequel les unités sont fixées à un élément de renforcement.

14. Moule suivant la revendication 13, dans lequel l'élément de renforcement est l'élément de fixation.

15. Moule suivant la revendication 11, dans lequel les unités sont fixées à l'élément de fixation au moyen d'un adhésif durcissable par un rayonnement UV.

16. Moule suivant l'une quelconque des revendications 11 à 15, possédant des vides entre les unités (1).

17. Moule suivant la revendication 16, dans lequel les vides ont des dimensions égales ou inférieures à 10 mm.

18. Moule suivant la revendication 17, dans lequel les vides ont des dimensions de 2 à 5 mm.

19. Moule suivant la revendication 16, 17 ou 18, dans lequel les vides sont rendus étanches avec une matière d'étanchéité.

20. Moule suivant la revendication 19, dans lequel la matière d'étanchéité est un élément de fixation.

21. Moule suivant la revendication 19, dans lequel un traitement de démoulage est appliqué à la surface de la matière d'étanchéité.

22. Moule suivant la revendication 19, dans lequel la matière d'étanchéité n'est pas corrodée par la résine pour le moulage par coulée.

23. Moule suivant la revendication 22, dans lequel la matière d'étanchéité est un verre à bas point de fusion.

24. Moule suivant la revendication 23, dans lequel la différence entre le taux de dilatation thermique du verre à bas point de fusion et le taux de dilatation thermique des unités est égale ou inférieure à 30 x 10⁻⁷/°C.

25. Moule suivant la revendication 24, dans lequel la différence entre le taux de dilatation thermique du verre à bas point de fusion et le taux de dilatation thermique des unités est égale ou inférieure à 20 x 10⁻⁷/°C.

26. Moule suivant la revendication 22, dans lequel la matière d'étanchéité est un métal à bas point de fusion.

27. Moule suivant la revendication 26, dans lequel le point de fusion du métal de bas point de fusion est égal ou inférieur à 300°C.

28. Moule suivant la revendication 22, dans lequel la matière d'étanchéité est une résine.

29. Moule suivant la revendication 28, dans lequel la résine est une résine thermodurcissable.

30. Moule suivant la revendication 29, dans lequel la résine est un adhésif.

31. Moule suivant la revendication 30, dans lequel l'adhésif est un adhésif du type époxy-acrylate.

32. Moule suivant la revendication 28, dans lequel la résine possède un module de Young de 2 à 300 kg/cm².

33. Moule suivant la revendication 32, dans lequel la résine possède un module de Young de 2 à 80 kg/cm².

34. Moule suivant la revendication 19, dans lequel la matière d'étanchéité est une matière possédant un angle de contact, tel qu'il est mesuré avec l'eau, égal ou supérieur à 100°.

35. Moule suivant la revendication 19, dans lequel la matière d'étanchéité fait saillie hors de la surface des unités.

36. Procédé de préparation d'un substrat pour un support d'enregistrement d'informations, qui comprend l'étape consistant à verser une résine liquide dans un moule suivant l'une quelconque des revendications précédentes et à laisser la résine se solidifier.
